# EUROPÄISCHE PATENTSCHRIFT

(11) **EP 0 514 424 B1**
(45) Veröffentlichungstag und Bekanntmachung des Hinweises auf die Patenterteilung: **18.05.1994**
(21) Anmeldenummer: 91903389.4
(22) Anmeldetag: 08.02.1991
(51) Int. Cl.: H01F 27/26

(54) **MAGNETSPULE AUS GESTAPELTEN BLECHEN, ELEKTRISCHE MASCHINE MIT MAGNETSPULEN AUS GESTAPELTEN BLECHEN, VERFAHREN ZUR HERSTELLUNG VON MAGNETSPULEN**
MAGNETIC COIL COMPOSED OF STACKED METAL SHEETS, ELECTRICAL MACHINE WITH MAGNETIC COILS COMPOSED OF STACKED METAL SHEETS, AND PROCESS FOR MANUFACTURING MAGNETIC COILS
BOBINE EXCITATRICE FORMEE DE TOLES EMPILEES, MOTEUR ELECTRIQUE MUNI DE TELLES BOBINES ET PROCEDE DE FABRICATION DESDITES BOBINES

(30) Priorität: 09.02.1990 DE 4004019
(43) Veröffentlichungstag der Anmeldung: 25.11.1992
(73) Patentinhaber: MAGNET-MOTOR GESELLSCHAFT FÜR MAGNETMOTORISCHE TECHNIK MBH, D-82319 Starnberg (DE)
(72) Erfinder: HEIDELBERG, Götz, D-8136 Starnberg-Percha (DE); EHRHART, Peter, D-8000 München 70 (DE); GRÜNDL, Andreas, D-8000 München 70 (DE); WECK, Werner, D-8130 Starnberg (DE); SCHÖLDERLE, Hermann, D-8121 Aidenried (DE)
(74) Vertreter: Klunker . Schmitt-Nilson . Hirsch
(86) Internationale Anmeldenummer: EP9100251
(87) Internationale Veröffentlichungsnummer: WO9112619

(56) Entgegenhaltungen:
- EP-A- 0 339 384
- DE-A- 2 753 586
- FR-A- 1 600 511

## Beschreibung

Die Erfindung bezieht sich auf eine Magnetspule, die aus in der Spulenachsenrichtung aufeinanderfolgend gestapelten, im wesentlichen ringförmigen Blechen aufgebaut ist, mit folgenden Merkmalen:
(a) die Bleche sind jeweils in einem Bereich ihres Umfangs unterbrochen;
(b) benachbarte Bleche sind in Serienschaltung mit gleicher Stromflußrichtung leitend miteinander verbunden;
(c) mindestens bei den im Inneren des Blechstapels liegenden Blechen sind die Unterbrechungen derart gestaltet, daß an der äußeren Radialseite eine in eine erste Umfangsrichtung weisende Zunge und an der inneren Radialseite eine in die entgegengesetzte, zweite Umfangsrichtung weisende Zunge vorhanden ist;
(d) bei den aufeinderfolgenden Blechen weisen sowohl auf der äußeren Radialseite als auch auf der inneren Radialseite die Zungen - wenn man in Spulenachsenrichtung fortschreitet - abwechselnd in die erste und in die zweite Umfangsrichtung;
(e) auf der äußeren und auf der inneren Radialseite sind überlappend benachbarte Zungen - wenn man in Spulenrichtung fortschreitet - abwechselnd leitend miteinander verbunden.

Bisher bestehen Magnetspulen in den meisten Fällen aus gewickeltem Draht. Bei gewickelten Spulen liegt der Füllfaktor, d.h. das Verhältnis von Gesamtleitermaterialquerschnitt zu für die Spule verfügbarem Gesamtquerschnitt, in der Regel maximal bei 60%. Man hat bereits daran gedacht, Magnetspulen aus einem Blechstapel zu bilden, wodurch sich ein wesentlich höherer Füllfaktor erreichen läßt und sich die Wirbelstromverluste bei Flußänderungen wesentlich verringern lassen.

Aus dem Dokument FR-A-1 600 511 ist eine Magnetspule der eingangs genannten Art bekannt. Bei dieser Magnetspule springen die an der äußeren Radialseite vorgesehenen Zungen nach außen über die Außenumfangskontur der Magnetspule vor und springen die an der inneren Radialseite vorgesehenen Zungen nach innen über die Innenumfangskontur der Magnetspulen vor.

Der Erfindung liegt die Aufgabe zugrunde, eine leichter und damit kosten - günster herstellbare Magnetspule der eimgangs genamten Art verfügbar zu machen.

Die erfindungsgemäße Magnetspule ist dadurch gekennzeichnet, daß sich die Zungen innerhalb der dort sowohl innenseitig als auch außenseitig im wesentlichen glatten Kontur der Magnetspule befinden.

Bei der erfindungsgemäßen Magnetspule ragen die Zungen nicht nach innen oder außen über die innenseitig und außenseitig im wesentlichen glatte Kontur der Magnetspule vor. Die Kontur der Magnetspule ist vorzugsweise kreisrund, quadratisch ggf. mit abgerundeten Ecken oder rechteckig ggf. mit abgerundeten Ecken.

Im Vergleich zu einer Magnetspule aus gestapelten Blechringen, die jeweils an einer Umfangsstelle einen radial verlaufenden Schlitz aufweisen, ist bei der erfindungsgemäßen Spule die Unterbrechung bei den einzelnen Blechen geometrisch komplizierter gestaltet (was jedoch keinerlei Herstellungsschwierigkeiten bietet), aber dafür wird eine entscheidende Erleichterung bei der Erzeugung der erforderlichen elektrischen Verbindung zwischen den Blechen erreicht. Insgesamt gesehen ist die Spule hinsichtlich der Verbindungen zwischen den Blechen unkomplizierter aufgebaut und leichter und damit kostengünstiger herstellbar.

Mit der Ausdrucksweise "im Inneren des Blechstapels liegende Bleche" soll darauf hingewiesen werden, daß das im Blechstapel erste Blech und das im Blechstapel letzte Blech nicht unbedingt erfindungsgemäße Zungen aufweisen müssen, da diese Bleche ja nur einseitig von der Unterbrechung mit einem benachbarten Blech verbunden werden müssen. Es ist aber möglich und im Sinne rationeller Herstellung sogar bevorzugt, auch die genannten Endbleche mit den Zungen wie die im Inneren des Blechstapels liegenden Bleche auszustatten.

Bevorzugte Ausgestaltungen der erfindungsgemäßen Magnetspule sind in den Ansprüchen 2 bis 14 angegeben. Hierzu werden teilweise nachfolgend und teilweise weiter unten im Zusammenhang mit der Beschreibung eines bevorzugten Ausführungsbeispiels noch weitere Ausführungen gemacht.

Es ist bevorzugt, daß die Unterbrechungen als im wesentlichen S-förmige Schlitze gestaltet sind, wobei die drei Schenkel des "S" vorzugsweise im wesentlichen geradlinig sind und gerundet ineinander übergehen. Zahlreiche andere Geometrien sind jedoch möglich, wobei ein geradliniger Schlitz, der relativ zu der Spulenachsen-Radialrichtung schräggestellt ist, als besonders einfacher Fall erwähnt wird.

Für die außen-innen-wechselnde Verbindung benachbarter Zungen gibt es mehrere technologisch günstige Möglichkeiten. Im Prinzip könnte man die zu verbindenden benachbarten Zungen durch angelötete Leiterbrücken miteinander verbinden. Eine Verbindung durch Verschweißen ist eine weitere Möglichkeit. Besonders bevorzugt ist jedoch eine Lötverbindung, die zwischen den Flachseiten der zu verbindenden, benachbarten Zungen vorgenommen ist. Dies gibt die besonders rationelle Möglichkeit, die erforderlichen Zungenverbindungen des gesamten Stapels gleichzeitig erzeugen zu können.

Vorzugsweise ist - in Spulenachsenrichtung betrachtet - die Spule im wesentlichen rechteckig (in der Regel mit leicht abgerundeten Ecken) und sind die Unterbrechungen an einer der kürzeren Rechteckseiten angeordnet. Dies ist eine Geometrie, die auf das besonders bevorzugte Einsatzgebiet der Spule, nämlich in elektrischen Maschinen, besonders abgestimmt ist. Die Unterbrechungen befinden sich damit.in einem Bereich, den man unter Übernahme der Terminologie von gewickelten Spulen als "Wickelkopfseite" bezeichnet. Dort hat man normalerweise mehr Platz zur Verfügung als im Bereich der längeren Rechteckseiten, die sich normalerweise in Nuten befinden, die in einem Eisenteil der elektrischen Maschine vorhanden sind.

Bei rotierenden elektrischen Maschinen hat man zuweilen die Situation, daß die genannten Nuten im Querschnitt nicht rechteckig, sondern im wesentlichen trapezförmig sind. Hierauf kann die Geometrie der erfindungsgemäßen Spule sehr einfach abgestimmt werden, indem man den Spulenquerschnitt mindestens bei den zwei entsprechenden Umfangsseiten der Spule im wesentlichen trapezförmig macht. Dies könnte durch Stapeln von Blechen unterschiedlicher Geometrie erfolgen. Viel rationeller ist es jedoch, den Spulenstapel insgesamt mechanisch zu bearbeiten, um die gewünschte Querschnittsform zu erzeugen. An den "Wickelkopfseiten" kann man, muß aber nicht, ebenfalls einen sich in Spulenachsenrichtung ändernden Spulenquerschnitt erzeugen.

Wenn man Spulen mit dem geschilderten Trapezquerschnitt hat, ergibt sich an sich das Problem, daß die Blechbreite der einzelnen Bleche und damit ihr elektrischer Widerstand unterschiedlich ist, je nachdem, ob man sich mehr an dem einen Axialende oder mehr an dem anderen Axialende der Spule befindet. Wenn man dennoch im Betrieb eine etwa gleiche Stromdichte in allen Blechen haben will, was günstig ist, kann man zum Ausgleich Bleche unterschiedliche Blechstärke und/oder an den zwei anderen Rechteckseiten, den "Wickelkopfseiten", Bleche unterschiedlicher Blechbreite vorsehen. Ein exakter Ausgleich für die Blechbreitenverringerung ist dabei nicht erforderlich. Man kann beispielsweise Bleche mit gruppenweise gleicher Blechstärke vorsehen und die Blechstärke von Gruppe zu Gruppe variieren. Wenn man einen gewissen Ausgleich durch vergrößerte Blechbreite an den zwei anderen Rechteckseiten vornimmt, ändert man selbstverständlich an den Verhältnissen des erhöhten elektrischen Widerstands im Bereich der beiden ersten Rechteckseiten nichts, aber bezogen auf den elektrischen Widerstand des gesamten, betreffenden Ringblechs erreicht man dennoch einen gewissen Ausgleich.

Überhaupt ist es günstig und bevorzugt, die Gesamtblechbreite in demjenigen Bereich, wo die Zungen ausgebildet sind, zu vergrößern, weil ja für jede der beiden Zungen nur ein Teil der Gesamtblechbreite zur Verfügung steht (was allerdings bei vollflächiger Verbindung überlappend benachbarter Zungen nicht mit einer Widerstandserhöhung einhergeht.

Die weiter unten noch genauer zu beschreibenden Öffnungen in den Blechen zur Ausbildung von Kühlfluid-Strömungskanälen und/oder zur Ausbildung von Kanälen für Blechstapel-Zusammenhalteelemente befinden sich vorzugsweise an den "Wickelkopfseiten" der Spule.

Vorzugsweise ist die Spule als kompakter Spulenblock ausgebildet. Zu diesem Zweck kann man den Blechstapel nach Erzeugung der elektrischen Verbindungen zwischen den zu verbindenden Zungen insgesamt in ein geeignetes Kunststoffmaterial eintauchen oder ein geeignetes Kunststoffmaterial aufbringen und dann dieses Kunststoffmaterial, beispielsweise durch Wärmezufuhr, zum Erhärten bringen. Auf diese Weise werden auch etwaig durch die beschriebene mechanische Nachbearbeitung freigelegte Blechkanten wieder isolierend abgedeckt.

Zur weiteren Förderung einer möglichst rationellen Herstellbarkeit der Spule können die Bleche, mindestens vor etwaiger Nachbearbeitung, untereinander in Draufsicht im wesentlichen gleiche Form haben und/oder können die Bleche gestanzte oder durch Herausätzen gefertigte Teile sein und/oder können zur Schaffung der Zungenausrichtung die Bleche im Blechstapel abwechselnd um 180° gewendet angeordnet sein.

Gegenstand der Erfindung ist ferner eine elektrische Maschine, insbesondere Rotationsmotor, Rotationsgenerator, Linearmotor oder Lineargenerator, die einen Stator und einen Läufer aufweist, wobei am Stator oder am Läufer Elektromagnetpole und an dem anderen Teil Dauermagnetpole vorgesehen sind, dadurch gekennzeichnet, daß Magnetspulen der vorstehend beschriebenen Art auf einem Eisenkern vorgesehen sind, um auf diese Weise Elektromagnetpole der elektrischen Maschine zu bilden. Die erfindungsgemäße Spule eignet sich hervorragend dafür, gesondert komplett vorgefertigt zu werden und als Ganzes auf den Spulenkern geschoben zu werden. Es wird darauf hingewiesen, daß nicht jeder Elektromagnetpol der Maschine ein mit Spule versehener Elektromagnetpol sein muß.

Abgesehen von den eingesetzten Magnetspulen ist die erfindungsgemäße elektrische Maschine vorzugsweise eine mit hochkoerzitiven Dauermagneten ausgestattete Maschine und/oder eine mit Gleichstrom zu speisende, elektronisch kommutierte Maschine und/oder eine nach dem Flußkonzentrationsprinzip gebaute Maschine. Hochkoerzitive Dauermagnetmaterialien sind insbesondere Materialien auf der Basis eines oder mehrerer Seltenerdelemente, insbesondere Samarium, und Kobalt sowie Materialien auf Eisen-Neodym-Basis. Eine bevorzugte Maschine nach dem Flußkonzentrationsprinzip ist so aufgebaut, daß die Dauermagnete in einer Richtung im wesentlichen parallel zur Relativbewegungsrichtung von Stator und Läufer magnetisiert sind und daß mittels magnetflußleitender Materialstücke zwischen den Dauermagneten der Magnetfluß umgelenkt und für den Luftspalt erhöht wird.

Gegenstand der Erfindung sind schließlich bevorzugte Verfahren zur Herstellung von Magnetspulen der vorstehend beschriebenen Art, wie sie in den Ansprüchen 16 bis 19 angegeben sind.

Nach einem ersten Herstellungsverfahren werden die einzelnen Bleche zunächst mindestens an einer Flachseite mit einer isolierenden Beschichtung versehen (oder werden die Bleche aus mindestens einseitig isoliertem Flachmaterial ausgestanzt), wird dann der Blechstapel aus einer Reihe von Blechen gebildet, und werden schließlich die Zungenverbindungen gleichzeitig erzeugt, vorzugsweise durch Löten. Dabei ist es günstig, wenn die zu verlötenden Stellen der Zungenverbindungen zuvor vorverzinnt worden sind. Selbstverständlich kann man die zu verlötenden Zungenbereiche vor der Aufbringung der Isolierung abdecken, damit sie frei von der Isolationsbeschichtung bleiben.

Nach einem zweiten bevorzugten Verfahren wird zunächst aus unisolierten Blechen der Blechstapel gebildet, werden dann die Zungenverbindungen, vorzugsweise durch Löten erzeugt, und wird schließlich zwischen die benachbarten Bleche eine Isolierung eingebracht. Das Einbringen der Isolierung kann man sich dadurch erleichtern, daß der Blechstapel ziehharmonikaartig auseinandergezogen wird.

Zum Aufbringen bzw. Einbringen der Isolierung eignet sich beispielsweise ein elektrophoretisches Lackieren.

Am günstigsten geschieht das Verlöten durch Erhitzen der vorverzinnten Zungen und nicht durch Eintauchen in ein Lötbad.

Der Blechstapel kann vor oder nach der Erzeugung der Zungenverbindungen und vor oder nach der Einbringung der Isolierung zwischen die benachbarten Bleche an der äußeren und/oder der inneren Radialseite mechanisch nachbearbeitet werden, insbesondere durch Fräsen, Schleifen oder dergleichen. Dabei läßt sich auch die bereits weiter vorne beschriebene Trapezquerschnittsform erzeugen.

Vorzugsweise wird, wie bereits weiter vorne angesprochen, der elektrisch verbundene und gegebenenfalls mechanisch nachbearbeitete Blechstapel mit einem geeigneten Material, beispielsweise einem Tränklack, zu einem kompakten Spulenblock verbacken. Etwaige Blechstapel-Zusammehalteelemente aus nichtleitendem Material in entsprechenden Kanälen des Stapels können dabei schon vorhanden sein. Als Tränkmaterial kann man auch einen Kunststoff verwenden, der nicht nur Beschichtungsfilme bildet, sondern volumenfüllend erhärtet. Auf diese Weise kann man zugleich mit der Tränkungsbehandlung die Stapel-Zusammenhalteelemente erzeugen. In diesem Fall müßte man allerdings etwaige Kühlfluidkanäle mit später wieder zu entfernenden Kernen ausfüllen, um zu vermeiden, daß sich diese mit Kunststoff füllen. Durch die Tränkbehandlung kann man zugleich auch die Isolierung zwischen den Blechen bilden.

Es wird darauf hingewiesen, daß der Begriff "ringförmige Bleche" selbstverständlich nicht "kreisringförmige Bleche" bedeutet. "Ringformig" soll nur zum Ausdruck bringen, daß die Bleche - mit Ausnahme der jeweiligen Unterbrechung - eine umfangsmäßig geschlossene Konfiguration haben.

Die Erfindung und Ausgestaltungen der Erfindung werden nachfolgend anhand schematisiert zeichnerisch dargestellter Ausführungsbeispiele noch näher erläutert. Es zeigt:
- Figur 1: in perspektivischer Darstellung eine Reihe von Blechen, die (mit weiteren entsprechenden Blechen) zusammengeschoben den Blechstapel einer Magnetspule ergeben;
- Figur 2a: eine Ansicht des zusammengeschobenen Blechstapels von Fig. 1 von radial innen gemäß Pfeil 2a in Fig. 1;
- Figur 2b: eine Ansicht des zusammengeschobenen Blechstapels von Fig. 1 von radial außen gemäß Pfeil 2b in Fig. 1;
- Figur 3: in einem Querschnitt rechtwinklig zur Rotationsachse einen Teil eines Rotationselektromotors mit auf einem Statorzahn eingezeichneter Magnetspule.

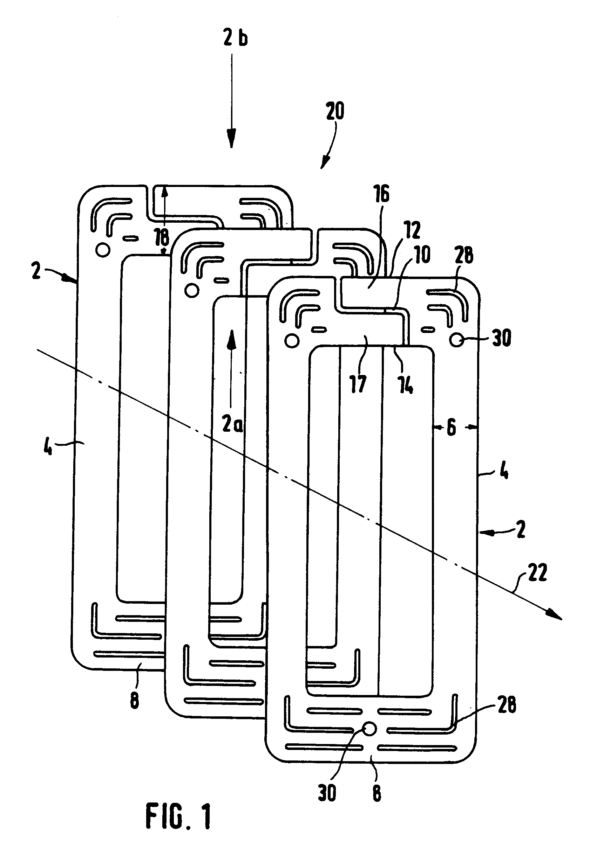

Die in Fig. 1 gezeichneten Bleche 2 sind im wesentlichen rechteckige Blechringe, die untereinander gleich sind und durch Stanzen hergestellt sind. Die Bleche haben an den beiden längeren Rechteckseiten 4 eine geringere Blechbreite 6 als an den beiden kürzeren Rechteckseiten 8.

An der in Fig. 1 oberen, kürzeren Rechteckseite 8 weisen die Bleche 2 jeweils einen eingestanzten, S-förmigen Schlitz 10 auf, der von der radial äußeren Seite 12 zur radial inneren Seite 14 durchgeht. Hierdurch ist der Blechring 2 an der entsprechenden Stelle unterbrochen. Auf die Länge des mittleren Schenkels des "S" 10 hat die obere, kürzere Querseite 8 des betreffenden Blechs 2 zwei Zungen 16,17 von denen jede knapp die Hälfte der dortigen Gesamtblechbreite 18 einnimmt.

Die Bleche 2 haben alle die gleiche Gestalt. Jedes zweite Blech 2 ist jedoch um 180° gewendet, so daß die bei den anderen Blechen 2 untere Flachseite oben liegt. Infolgedessen überlappen sich bei den benachbarten Blechen 2 jeweils die radial äußeren Zungen 16 und die radial inneren Zungen 17. Im Fall des in Fig. 1 hintersten Blechs 2 weist die radial äußere Zunge 17 in Fig. 1 nach links und die radial innere Zunge 16 in Fig. 1 nach rechts. Im Fall des in Fig. 1 vorn benachbarten, nächsten Blechs weist die radial äußere Zunge 16 in Fig. 1 nach rechts und die radial innere Zunge 17 in Fig. 1 nach links.

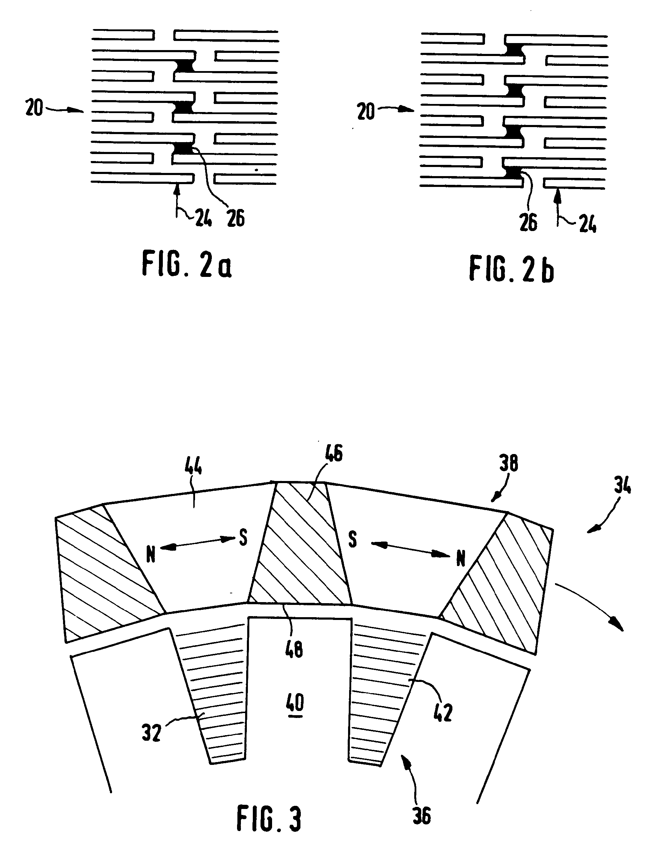

Wenn man davon ausgeht, daß das in Fig. 1 hinterste Blech 2 das unterste Blech eines Blechstapels 20 ist, der durch Stapeln einer Vielzahl der Bleche 2 gebildet ist (veranschaulicht vorstellbar durch Zusammenschieben der Bleche 2 und weiterer entsprechender Bleche 2 längs der Spulenachsenrichtung 22 in Fig. 1), und daß das hinterste (in Fig. 2a und 2b untersten) Blech an der radial inneren Zunge 17 eine Stromzuleitung 24 aufweist, muß die radial äußere Zunge 16 des untersten Blechs 2 mit der radial äußeren Zunge des benachbarten Blechs 2 elektrisch verbunden werden, wie in Fig. 2b mit der dort untersten Lötung 26 angedeutet. Zwischen dem zweituntersten und dem drittuntersten Blech muß die leitende Verbindung zwischen den beiden radial inneren Zungen 17 vorgenommen werden, wie in Fig. 2a mit der dort untersten Lötstelle 26 angedeutet. In dieser Weise geht die Art der Verbindung der Zungen durch den gesamten Stapel 20 durch. Zur Vervollständigung des Stapels 20 muß man sich in Fig. 1 vorn und in Fig. 2a und 2b oben weitere Bleche hinzugefügt vorstellen. Auf diese Weise sind alle Bleche in Serienschaltung mit gleicher Stromflußrichtung leitend miteinander verbunden. Man erkennt auch, daß bei dem in Fig. 1 hintersten und in Fig. 2a und 2b untersten Blech 2 die radial innere Zunge 17 an sich entbehrlich ist. Es kommt nur darauf an, daß diesem Blech auf der der radial äußeren Zunge 16 auf der anderen Seite des Schlitzes 10 gegenüberliegenden Seite Strom zugeführt wird.

Die in Fig. 1 gezeichneten Bleche 2 weisen im Bereich der kürzeren Rechteckseiten 8 erste Öffnungen 28 auf, die relativ schmal und langgestreckt sind und die zum Teil eine 90°-Abbiegung aufweisen. Die in Fig. 1 gezeichneten Bleche 2 weisen ferner drei zweite Öffnungen 30 auf, ebenfalls insgesamt im Bereich der kürzeren Rechteckseiten 8. Wenn die Bleche 2 gestapelt sind, fluchten die ersten Öffnungen 28 und die zweiten Öffnungen 30 der Bleche 2 miteinander. Die durch die ersten Öffnungen 28 in dem Stapel 20 gebildeten Kanäle sind Kühlfluid-Strömungskanäle.

Die durch die zweiten Öffnungen 30 in dem Stapel 20 gebildeten Kanäle sind Kanäle, in denen nicht eingezeichnete Blechstapel-Zusammenhalteelemente aus nichtleitendem Material, beispielsweise Kunststoff, untergebracht werden.

Durch die beschriebene elektrische Vereinigung der Bleche 2 des Stapels 20 ist eine Magnetspule 32 entstanden.

In Fig. 3 ist ein Elektromotor 34 ausschnittsweise und schematisiert veranschaulicht. Der Elektromotor 34 weist einen im wesentlichen trommelförmigen, inneren Stator 36 und einen im wesentlichen ringförmigen, den Stator 36 umgebenden Außenläufer 38 auf. Die vorstehend beschriebene Magnetspule 32 ist auf den in Fig. 3 mittleren Statorzahn 40 des Stators 36 als vorgefertigte Einheit von außen her aufgeschoben. Es handelt sich um einen Elektromotor 34 mit relativ kleinem Durchmesser, und infolgedessen sind die Nuten 42 zwischen benachbarten Statorzähnen im Schnitt der Fig. 3 trapezförmig mit der längeren Basisseite radial außen. Die weiter vorn beschriebene Magnetspule 32 ist mindestens an ihren längeren Rechteckseiten 4 sowohl innenseitig als auch außenseitig derart abgefräst, daß sie mit diesen längeren Rechteckseiten 4 in die beiden in Axialrichtung des Motors 34 verlaufenden Nuten 42 links und rechts des mittleren Statorzahns 40 paßt.

Am Läufer 38 wechseln, in Umfangsrichtung fortschreitend, Dauermagnete 44 und Flußleitstücke 46 miteinander ab. Die Dauermagnete 44 sind in Umfangsrichtung magnetisiert, und zwar in abwechselnder Richtung, so daß an jedes Flußleitstück 46 entweder zwei dauermagnetische Südpole oder zwei dauermagnetische Nordpole anschließen. Der in Umfangsrichtung gerichtete Magnetflußguerschnitt jedes Dauermagneten 44 ist wesentlich größer als die Hälfte des radial inneren Magnetfluß-Austrittsquerschnitts 48 eines Flußleitstücks, so daß am Magnetfluß-Austrittsquerschnitt 48 jedes Flußleitstücks 46 eine höhere Magnetflußdichte als in den Dauermagneten 44 herrscht.

## Patentansprüche

1. Magnetspule (32), die aus in der Spulenachsenrichtung (22) aufeinanderfolgend gestapelten, im wesentlichen ringförmigen Blechen (2) aufgebaut ist, mit folgenden Merkmalen:
(a) die Bleche (2) sind jeweils in einem Bereich ihres Umfangs unterbrochen;
(b) benachbarte Bleche (2) sind in Serienschaltung mit gleicher Stromflußrichtung leitend miteinander verbunden;
(c) mindestens bei den im Inneren des Blechstapels (20) liegenden Blechen (2) sind die Unterbrechungen (10) derart gestaltet, daß an der äußeren Radialseite eine in eine erste Umfangsrichtung weisende Zunge (16) und an der inneren Radialseite eine in die entgegengesetzte, zweite Umfangsrichtung weisende Zunge (17) vorhanden ist.;
(d) bei den aufeinanderfolgenden Blechen (2) weisen sowohl auf der äußeren Radialseite als auch auf der inneren Radialseite die Zungen (16, 17) - wenn man in Spulenachsenrichtung (22) fortschreitet - abwechselnd in die erste und in die zweite Umfangsrichtung;
(e) auf der äußeren Radialseite und auf der inneren Radialseite sind überlappend benachbarte Zungen (16, 17) - wenn man in Spulenachsenrichtung (22) fortschreitet - abwechselnd leitend miteinander verbunden,
dadurch gekennzeichnet, daß sich die Zungen (16, 17) innerhalb der dort sowohl innenseitig als auch außenseitig im wesentlichen glatten Kontur der Magnetspule (32) befinden.

2. Magnetspule nach Anspruch 1,
dadurch gekennzeichnet, daß die Unterbrechungen als im wesentlichen S-förmige Schlitze (10) gestaltet sind.

3. Magnetspule nach Anspruch 1 oder 2,
dadurch gekennzeichnet,
daß die Zungen (16,17) durch Schweißung verbunden sind.

4. Magnetspule nach Anspruch 1 oder 2,
dadurch gekennzeichnet,
daß die Zungen (16,17) durch Lötung (26) verbunden sind.

5. Magnetspule nach einem der Ansprüche 1 bis 4,
dadurch gekennzeichnet,
daß sie - in Spulenachsenrichtung (22) betrachtet - im wesentlichen rechteckig ist und daß die Unterbrechungen (10) an einer der kürzeren Rechteckenseiten (8) angeordnet sind.

6. Magnetspule nach einem der Ansprüche 1 bis 5,
dadurch gekennzeichnet,
daß sie - in Spulenachsenrichtung (22) betrachtet - im wesentlichen rechteckig ist und daß mindestens bei zwei Rechteckseiten (4) - im Achsenschnitt betrachtet - der Spulenguerschnitt im wesentlichen trapezförmig ist.

7. Magnetspule nach Anspruch 6,
dadurch gekennzeichnet,
daß zum zumindest teilweisen Ausgleich der aufgrund der Trapezform verringerten Blechbreite (6) Bleche (2) unterschiedlicher Blechstärke und/oder Bleche unterschiedlicher Blechbreite an den zwei anderen Rechteckseiten (8) vorgesehen sind.

8. Magnetspule nach einem der Ansprüche 1 bis 7,
dadurch gekennzeichnet,
daß die Blechbreite (18) in demjenigen Bereich, wo die Zungen (16,17) ausgebildet sind, vergrößert ist.

9. Magnetspule nach einem der Ansprüche 1 bis 8,
dadurch gekennzeichnet,
daß die Bleche (2) erste Öffnungen (28) aufweisen, die im Blechstapel (20) im wesentlichen miteinander fluchten, und daß die sich so ergebenden ersten Kanäle Kühlfluid-Strömungskanäle sind.

10. Magnetspule nach einem der Ansprüche 1 bis 9,
dadurch gekennzeichnet,
daß die Bleche (2) zweite Öffnungen (30) aufweisen, die im Blechstapel (20) im wesentlichen miteinander fluchten, und daß in den sich so ergebenden zweiten Kanälen Blechstapel-Zusammenhalteelemente aus nichtleitendem Material vorgesehen sind.

11. Magnetspule nach einem der Ansprüche 1 bis 10,
dadurch gekennzeichnet,
daß sie mit einem erhärteten, isolierenden Tränkmaterial getränkt ist.

12. Magnetspule nach einem der Ansprüche 1 bis 11,
dadurch gekennzeichnet,
daß die Bleche (2) gestanzt sind.

13. Magnetspule nach einem der Ansprüche 1 bis 12,
dadurch gekennzeichnet,
daß die Bleche (2), mindestens vor etwaiger Nachbearbeitung, untereinander in Draufsicht im wesentlichen gleiche Form haben.

14. Magnetspule nach einem der Ansprüche 1 bis 13,
dadurch gekennzeichnet,
daß zur Schaffung der Zungenausrichtung die Bleche (2) im Blechstapel (20) abwechselnd um 180° gewendet angeordnet sind.

15. Elektrische Maschine (34), insbesondere Rotationsmotor, Rotationsgenerator, Linearmotor oder Lineargenerator, die einen Stator (36) und einen Läufer (38) aufweist, wobei am Stator (36) oder am Läufer Elektromagnetpole (40) und an dem anderen Teil Dauermagnetpole (48) vorgesehen sind,
dadurch gekennzeichnet,
daß zur Bildung von Elektromagnetpolen (40) Magnetspulen (32) gemäß einem der Ansprüche 1 bis 14 auf einem Eisenkern (40) vorgesehen sind.

16. Verfahren zur Herstellung von Magnetspulen (32) nach einem der Ansprüche 1 bis 14,
dadurch gekennzeichnet,
daß die Bleche (2) mindestens auf einer Flachseite - mit Ausnahme der zu verbindenden Zungenbereiche - mit einer isolierenden Beschichtung versehen werden, daß der Blechstapel (20) gebildet wird und daß die Zungenverbindungen (26) gleichzeitig durch Löten erzeugt werden.

17. Verfahren zur Herstellung von Magnetspulen (32) nach einem der Ansprüche 1 bis 14,
dadurch gekennzeichnet,
daß aus den Blechen (2) der Blechstapel (20) gebildet wird, daß die Zungenverbindungen (26) gleichzeitig durch Löten erzeugt werden und daß zwischen die benachbarten Bleche (2) eine Isolierung eingebracht wird.

18. Verfahren nach Anspruch 16 oder 17,
dadurch gekennzeichnet,
daß der elektrisch verbundene Blechstapel (20) an der äußeren und/oder der inneren Radialseite mechanisch nachbearbeitet wird.

19. Verfahren nach einem der Ansprüche 16 bis 18,
dadurch gekennzeichnet,
daß der elektrisch verbundene und gegebenenfalls mechanisch nachbearbeitete Blechstapel (20) mit einem Tränkmaterial getränkt und dann durch Erhitzen zu einem Spulenblock gebacken wird.

## Claims

1. A magnetic coil (32) composed of substantially annular metal sheets (2) stacked in successive manner in the direction of the axis (22) of the coil, said coil having the following features:
(a) the metal sheets (2) are each interrupted in a portion of their periphery;
(b) adjacent metal sheets (2) are conductively connected to each other in series with the same direction of current flow;
(c) at least in the metal sheets (2) located inside in the stack (20) of metal sheets the interruptions (10) are designed such that the outer radial side has a tongue (16) facing in a first peripheral direction and the inner radial side has a tongue (17) facing in a second, opposite peripheral direction;
(d) - advancing in the direction of the axis (22) of the coil - the tongues (16, 17) both on the outer radial side and on the inner radial side of the successive metal sheets (2) are directed alternately in the first and second peripheral directions;
(e) - advancing in the direction of the axis (22) of the coil - overlapping adjacent tongues (16, 17) are conductively connected to each other alternately on the outer and inner radial sides,
characterized in that the tongues (16, 17) are located within the contour of the magnetic coil (32) which is substantially smooth there both on the inside and on the outside.

2. A magnetic coil according to claim 1,
characterized in that the interruptions are designed in the form of substantially S-shaped slots (10).

3. A magnetic coil according to claim 1 or 2,
characterized in that the tongues (16, 17) are connected by welding.

4. A magnetic coil according to claim 1 or 2,
characterized in that the tongues (16, 17) are connected by soldering (26).

5. A magnetic coil according to any one of claims 1 to 4, characterized in that it is substantially rectangular - as seen in the direction of the axis (22) of the coil - and that the interruptions (10) are disposed on one of the shorter sides (8) of the rectangle.

6. A magnetic coil according to any one of claims 1 to 5, characterized in that it is substantially rectangular - as seen in the direction of the axis (22) of the coil - and that at least on two sides (4) of the rectangle - as seen in an axial cross-section - the cross-section of the coil is substantially trapezoidal.

7. A magnetic coil according to claim 6,
characterized in that at least for partial compensation of the reduced metal sheet width (6) due to the trapezoidal shape, metal sheets (2) of different metal sheet thicknesses and/or metal sheets of different metal sheet widths on the two other sides (8) of the rectangle are provided.

8. A magnetic coil according to any one of claims 1 to 7, characterized in that the metal sheet width (18) is increased in the portion where the tongues (16, 17) are formed.

9. A magnetic coil according to any one of claims 1 to 8, characterized in that the metal sheets (2) have first openings (28) which are substantially aligned with each other in the stack (20) of metal sheets, and that the thus resulting first channels are cooling fluid flow channels.

10. A magnetic coil according to any one of claims 1 to 9, characterized in that the metal sheets (2) have second openings (30) which are substantially aligned with each other in the stack (20) of metal sheets, and that holding members of non-conductive material are provided in the thus resulting second channels for holding the stack of metal sheets together.

11. A magnetic coil according to any one of claims 1 to 10, characterized in that it is impregnated with a hardened, insulating, impregnating material.

12. A magnetic coil according to any one of claims 1 to 11, characterized in that the metal sheets (2) are stamped.

13. A magnetic coil according to any one of claims 1 to 12, characterized in that the metal sheets (2), at least before a possible post-machining operation, have mutually substantially the same shape as seen in a plan view.

14. A magnetic coil according to any one of claims 1 to 13, characterized in that, for providing the tongue alignment, the metal sheets (2) in the stack (20) are disposed alternately turned by 180°.

15. An electric machine (34), in particular a rotary motor, a rotary generator, a linear motor or a linear generator, comprising a stator (36) and a rotor (38), with electromagnet poles (40) being provided on the stator or on the rotor and permanent magnets (48) being provided on the other part,
characterized in that, for forming electromagnet poles (40), magnetic coils (32) according to any one of claims 1 to 14 are provided on an iron core (40).

16. A process for manufacturing magnetic coils (32) according to any one of claims 1 to 14,
characterized in that the metal sheets (2) at least on one face side thereof - except for the tongue portions to be connected - are provided with an insulating coating, that the stack (20) of metal sheets is formed and that the tongue connections (26) are formed at the same time by soldering.

17. A process for manufacturing magnetic coils (32) according to any one of claims 1 to 14,
characterized in that the stack (20) is formed of the metal sheets (2), that the solder connections (26) are formed at the same time by soldering and that an insulation is introduced between the adjacent metal sheets (2).

18. A process according to claim 16 or 17,
characterized in that the electrically connected stack (20) of metal sheets is subjected to mechanical post-machining on the outer and/or the inner radial side.

19. A process according to any one of claims 16 to 18,
characterized in that the electrically connected and possibly mechanically post-machined stack (20) of metal sheets is impregnated with an impregnating material and is then baked by heating so as to form a coil block.

## Revendications

1. Bobine magnétique (32), montée à partir de tôles (2) sensiblement annulaires, empilées les uns à la suite des autres dans la direction de l'axe (22), présentant les caractéristiques suivantes :
(a) les tôles (2) sont chacune interrompues dans une zone de leur périphérie;
(b) des tôles (2) voisines sont reliées ensemble de façon conductrice selon un montage série avec la même direction du courant électrique;
(c) au moins dans le cas des tôles (2) situées à l'intérieur de la pile de tôle (20), les interruptions (10) sont configurées de manière que du côté radialement extérieur existe une languette (16) tournée dans une première direction périphérique et que, du côté radialement intérieur, existe une languette (17) tournée dans la deuxième direction périphérique opposée;
(d) dans le cas où les tôles (2) sont placées les unes à la suite des autres, tant du côté radialement extérieur qu'également du côté radialement intérieur, les languettes (16, 17) - si l'on se déplace dans la direction axiale de la bobine (22) - sont tournées alternativement dans la première et dans la deuxième direction périphérique;
(e) sur le côté radialement extérieur et sur le côté radialement intérieur sont placées des languettes (16, 17) se chevauchant - si l'on se déplace dans la direction axiale de la bobine (22) - reliées ensemble alternativement et de façon conductrice,
caractérisée en ce que les languettes (16, 17) se trouvent dans la limite du contour de la bobine magnétique (22), contour pratiquement lisse tant côté intérieur qu'également côté extérieur.

2. Bobine magnétique selon la revendication 1, caractérisée en ce que les interruptions sont configurées sous forme de fente (10) sensiblement en forme de S.

3. Bobine magnétique selon la revendication 1 ou 2, caractérisée en ce que en ce que les languettes (16, 17) sont reliées par soudage.

4. Bobine magnétique selon la revendication 1 ou 2, caractérisée en ce que les languettes (16, 17) sont reliées par brasage (26).

5. Bobine magnétique selon l'une des revendications 1 à 4, caractérisée en ce que - observée dans la direction de l'axe de bobine (22) - elle est sensiblement rectangulaire et que les interruptions (10) sont disposées sur l'un des petits côtés (8) du rectangle.

6. Bobine magnétique selon l'une des revendications 1 à 5, caractérisée en ce que - observée dans la direction de l'axe de bobine (22) - elle est sensiblement rectangulaire et qu'au moins pour deux côtés de rectangle (4) -en observant en coupe dans l'axe - la section transversale de la bobine est sensiblement trapézoïdale.

7. Bobine magnétique selon la revendication 6, caractérisée en ce que en ce que pour compenser au moins partiellement la largeur de tôle (6) diminuée du fait de la forme trapézoïdale, des tôles (2) d'épaisseur et/ou de largeur différentes sont prévues sur les deux autres côtés de rectangle (8).

8. Bobine magnétique selon l'une des revendications 1 à 7, caractérisée en ce que la largeur (18) de la tôle est augmentée dans la zone où sont réalisées les languettes (16, 17).

9. Bobine magnétique selon l'une des revendications 1 à 8, caractérisée en ce que les tôles(2) présentent des premières ouvertures (28), sensiblement alignées les uns par rapport aux autres dans la pile de tôles (20), et en ce que les premiers canaux ainsi créés sont des canaux d'écoulement de fluide de refroidissement.

10. Bobine magnétique selon l'une des revendications 1 à 9, caractérisée en ce que les tôles (2) présentent des deuxièmes ouvertures (30), sensiblement alignées les uns par rapport aux autres dans la pile de tôles (20), et en ce que dans les deuxièmes canaux ainsi créés sont prévus des éléments de maintien de l'assemblage de la pile de tôles, réalisés en matériau non conducteur.

11. Bobine magnétique selon l'une des revendications 1 à 10, caractérisée en ce qu'ils sont imbibés avec un matériau d'imprégnation durci, isolant.

12. Bobine magnétique selon l'une des revendications 1 à 11, caractérisée en ce que les tôles (2) sont estampées.

13. Bobine magnétique selon l'une des revendications 1 à 12, caractérisée en ce que les tôles (2) présentent, au moins avant un retraitement éventuel, sensiblement la même forme lorsqu'on les observe en vue de dessus.

14. Bobine magnétique selon l'une des revendications 1 à 13, caractérisée en ce que, pour produire l'orientation des languettes, les tôles (2) sont disposées dans la pile de tôles (20) tournées alternativement de 180°.

15. Machine électrique (34), en particulier moteur tournant, générateur rotatif, moteur linéaire ou générateur linéaire, présentant un stator (36) et un rotor (38), des pôles électromagnétiques (40) étant prévus sur le stator (36) et des pôles à aimants permanent (48) étant prévus sur l'autre partie, caractérisée en ce que des bobines magnétiques (32) selon l'une des revendications 1 à 24 sur un noyau en fer (40) sont prévues pour former des pôles électromagnétiques (40).

16. Procédé de fabrication de bobines magnétiques selon l'une des revendications 1 à 14, caractérisé en ce que les tôles (2) sont pourvues, au moins sur une face plate - à l'exception des zones de languette à relier - avec un revêtement isolant, en ce que la pile de tôles (20) et formée et que les liaisons de languette (26) sont réalisées simultanément par brasage.

17. Procédé de fabrication de bobines magnétiques selon l'une des revendications 1 à 14, caractérisé en ce que la pile de tôles (20) est formée à partir des tôles (2), en ce que les liaisons de languette (26) sont réalisées simultanément par brasage et en ce qu'une isolation est insérée entre les tôles (2) voisines.

18. Procédé selon la revendication 16 ou 17, caractérisé en ce que la pile de tôles (20) reliée électriquement est retraitée mécaniquement sur le côté radialement extérieur et/ou intérieur.

19. Procédé selon l'une des revendications 16 à 18, caractérisé en ce que la pile de tôles (20) relie électriquement et, le cas échéant, retraitée mécaniquement est imprégnée avec un matériau d'imprégnation et cuite ensuite par chauffage pour former un bloc bobine.
